# EUROPÄISCHE PATENTSCHRIFT

(11) **EP 0 762 561 B1**
(45) Veröffentlichungstag und Bekanntmachung des Hinweises auf die Patenterteilung: **16.09.1998**
(21) Anmeldenummer: 96111244.8
(22) Anmeldetag: 12.07.1996
(51) Int. Cl.: H01R 29/00

(54) **Elektrische Leitung, vorzugsweise zur Verwendung an Fahrzeugen**
Electric conductor especially for use in vehicles
Conducteur électrique notamment pour l'utilisation dans des véhicules

(30) Priorität: 14.08.1995 DE 29513082 U
(43) Veröffentlichungstag der Anmeldung: 12.03.1997
(73) Patentinhaber: Rüttgerodt, Werner, 34355 Staufenberg (DE)
(72) Erfinder: Rüttgerodt, Werner, 34355 Staufenberg (DE)
(74) Vertreter: Patentanwälte Rehberg + Hüppe

(56) Entgegenhaltungen:
- DE-A- 3 019 313
- DE-A- 3 537 944
- US-A- 5 387 110

## Beschreibung

Die Erfindung betrifft eine elektrische Leitung mit einem eine Mehrzahl Adern aufweisenden Kabelstück, das an seinem einen Ende mit einem gezogenen Fahrzeug, einem Lastenträger o. dgl. verbindbar ist und an seinem anderen Ende einen ersten Stecker zum Anschluß an eine auf dem Zugfahrzeug angeordnete Dose aufweist.

Derartige Stecker und Dosen sowie entsprechende Adapter sind bekannt und dienen dazu, in Verbindung mit elektrischen Leitungsstücken die elektrische Versorgung eines gezogenen Fahrzeuges, eines Lastenträgers oder dgl. von einem Zugfahrzeug aus her sicherzustellen. Bei der Verbindung eines Zugfahrzeuges mit einem gezogenen Fahrzeug ist nicht nur die mechanische Verbindung bereitzustellen, sondern auch die elektrische. Die dabei eingesetzte elektrische Leitung muß jedoch nicht unbedingt zu einem gezogenen Fahrzeug führen. Es sind auch Lastenträger bekannt, die insbesondere der Aufnahme von mehreren Fahrrädern dienen, wobei der Lastenträger selbst mit der Kupplungskugel einer Anhängerkupplung auf dem Zugfahrzeug verbunden wird. Die Fahrräder erstrecken sich dann meist quer zur Fahrtrichtung des Zugfahrzeuges und verdecken dessen Rückleuchten zumindest teilweise, so daß die ordnungsgemäße Beleuchtung nicht mehr sichergestellt ist. Aus diesem Grunde muß beispielsweise der Lastenträger mit eigenen elektrisch betätigbaren Rückleuchten versehen werden, die dann über die eingangs beschriebene elektrische Leitung mit elektrischer Energie versorgt werden. Analoges gilt für die Verbindung eines Zugfahrzeuges mit einem gezogenen Fahrzeug, beispielsweise einem Wohnwagenanhänger.

Aus der DE-A- 42 14 315, der EP-B- 0 176 677 oder auch der EP-B- 0 286 687 sind derartige Stecker, Dosen und entsprechende Verbindungselemente bekannt. Es gibt Stecker und Dosen, die sich im wesentlichen durch die Anzahl der Kontaktpole unterscheiden. So gibt es 7-polige, 13-polige, aber auch 15-polige Stecker mit entsprechend zugehörigen Dosen. Am Ende eines Zugfahrzeuges wird eine Dose angeordnet. Vorne an dem gezogenen Fahrzeug befindet sich über ein Kabelstück beweglich ein Stecker. Bei der Erstausrüstung von gezogenen Fahrzeugen, beispielsweise Wohnwagen, entsteht die Frage, welche Art Stecker am vorderen Ende des Kabelstückes zu montieren ist, ob beispielsweise ein 7-poliger oder ein 13-poliger Stecker. Der Hersteller des Wohnwagens in jedoch nur in den seltensten Fällen darüber informiert, welche Art Dose auf dem Zugfahrzeug des späteren Erwerbers des Wohnwagens angeordnet bzw. vorgesehen ist. Bisher besteht die Praxis, daß der Wohnwagenhersteller irgendeinen Stecker, z. B. einen 7-poligen Stecker, am vorderen Ende des Kabelstücks montiert, welches andererseits mit den entsprechenden Beleuchtungseinrichtungen des Wohnwagens verbunden wird. Es bleibt dann dem Käufer des Wohnwagens überlassen, ob er am Ende seines Zugfahrzeuges eine zugehörige Dose montiert oder den Umweg über einen Adapter sucht, der zwischen Dose und Stecker einzufügen ist und der die entsprechende Leitungsverbindung herzustellen erlaubt. Dabei gibt es unterschiedliche Arten von Adaptern, beispielsweise ein solcher Adapter, der die Verbindung zwischen einer 7-poligen Dose am Ende des Zugfahrzeuges und einem 13-poligen Stecker am Anfang des Anhängers gestattet. Andere Adapter lassen die Verbindung einer 13-poligen Dose am Ende des Zugfahrzeuges und eines 7-poligen Steckers am Anfang des gezogenen Fahrzeugs zu. Wird das gezogene Fahrzeug wahlweise von mehreren Zugfahrzeugen gefahren, die mit unterschiedlichen Dosen bestückt sind, muß jeweils ein gesonderter zugehöriger Adapter für den jeweiligen Anwendungsfall benutzt werden. Es versteht sich, daß dies entsprechend umständlich, kostspielig und für den Anwender auch mühsam ist.

Der Erfindung liegt die Aufgabe zugrunde, eine elektrische Leitung der eingangs beschriebenen Art bereitzustellen, die an ein gezogenes Fahrzeug, einen Lastenträger für z. B. Fahrräder oder dgl. montierbar ist und die wahlweise Verbindung mit auch unterschiedlichen Dosen an Zugfahrzeugen ermöglicht.

Erfindungsgemäß wird dies durch eine elektrische Leitung der eingangs beschriebenen Art dadurch erreicht, daß der Stecker kabelstückseitig mit einem weiteren Kabelstück elektrisch leitend verbunden ist, an dessen anderem Ende ein weiterer Stecker angeschlossen ist, der anders als der erste Stecker ausgebildet und damit einer entsprechend anders ausgebildeten weiteren Dose zugeordnet ist.

Die Erfindung geht von dem Gedanken aus, am vorderen Ende eines Kabelstücks mindestens zwei Stecker anzuordnen, die wahlweise benutzbar sind und ordnungsgemäß miteinander elektrisch leitend verbunden sind. Dabei ergibt sich ein weiteres Kabelstück zwischen den beiden Steckern. Wenn der eine Stecker beispielsweise als 7-poliger Stecker und der andere Stecker als 13-poliger Stecker ausgebildet ist, kann das mit dieser Leitung ausgerüstete gezogene Fahrzeug wahlweise mit einer 7-poligen Dose oder mit einer 13-poligen Dose am Ende des Zugfahrzeuges verbunden werden. Der jeweils nicht benutzte Stecker verbleibt dann offen, wobei er in geeigneter Weise gesichert werden kann. Die neue Leitung vereinfacht die Lagerhaltung und die Ausrüstung der gezogenen Fahrzeuge. Ihre Anwendung erleichtert auch den Umgang beim Kuppeln für den Anwender. Die Anwendung eines Adapters erübrigt sich, um im Vergleich mit der Verwendung eines Adapters, der bekanntlich aus einer Stecker/Dosen-Kombination besteht, ergibt sich eine preiswertere Herstellmöglichkeit, da eine Dose in Fortfall kommt. Da die bekannten Adapter ohnehin relativ teuer sind, stellt die vorgeschlagene Lösung eine wesentlich preiswertere Möglichkeit dar. Die neue Leitung ermöglicht auch das Kuppeln mit unterschiedlich ausgestatteten Zugfahrzeugen.

Besonders sinnvoll ist es in diesem Zusammenhang, wenn an dem Ende des Kabelstücks, an dem auch die Stecker angeordnet sind, zwei Schutzkappen vorgesehen sind, die das wahlweise Verschließen des jeweils nicht benutzten Steckers ermöglichen. Die eine Schutzkappe ist dabei dem ersten Stecker und die andere Schutzkappe dem weiteren Stecker zugeordnet. Es versteht sich, daß die Kontaktpole des jeweils nicht benutzten Steckers über die zugehörige Schutzkappe abgedeckt werden, damit dem Eindringen von Schmutz und Feuchtigkeit in diesen nicht benutzten Stecker entgegengewirkt wird. Die Schutzkappen selbst können auch untereinander und/oder mit den jeweiligen Steckern in Verbindung stehen.

Es besteht auch die Möglichkeit, daß die beiden Schutzkappen Rücken an Rücken miteinander zu einem einstückigen Formkörper vereinigt sind. Damit wird gleichsam eine Universalschutzkappe geschaffen, die wahlweise auf den einen oder anderen Stecker aufgesetzt werden kann, wenn unterstellt wird, daß die beiden Steckergehäuse unterschiedliche Durchmesser aufweisen. Wenn die unterschiedlichen Stecker dagegen gleiche Gehäusedurchmesser an der Anschlußstelle aufweisen, kann die jeweilige Funktion auch von einer einzelnen Schutzkappe erbracht werden.

Die Schutzkappe oder die Schutzkappen können über ein oder mehrere Zugorgane, insbesondere Schnur, mit einem oder beiden Steckern verbunden sein. Dieses Zugorgan stellt damit gleichzeitig die Verbindung zwischen den beiden Steckern her und sorgt dafür, daß der nicht benutzte Stecker auch in der Fahrstellung an dem benutzten Stecker gehalten bzw. abgestützt ist.

Der eine Stecker kann als 13-poliger Stecker und der weitere Stecker als 7-poliger Stecker ausgebildet sein. Natürlich ist auch die Kombination anderweitig ausgebildeter Stecker möglich. Als kleinste Einheit sind an dem Kabelstück wenigstens zwei Stecker angeordnet. Es besteht natürlich auch die Möglichkeit, daß über ein drittes Kabelstück ein dritter Stecker mit dem ersten Stecker direkt oder indirekt über den zweiten Stecker in Verbindung steht. Der dritte Stecker kann beispielsweise ein 15-poliger Stecker sein.

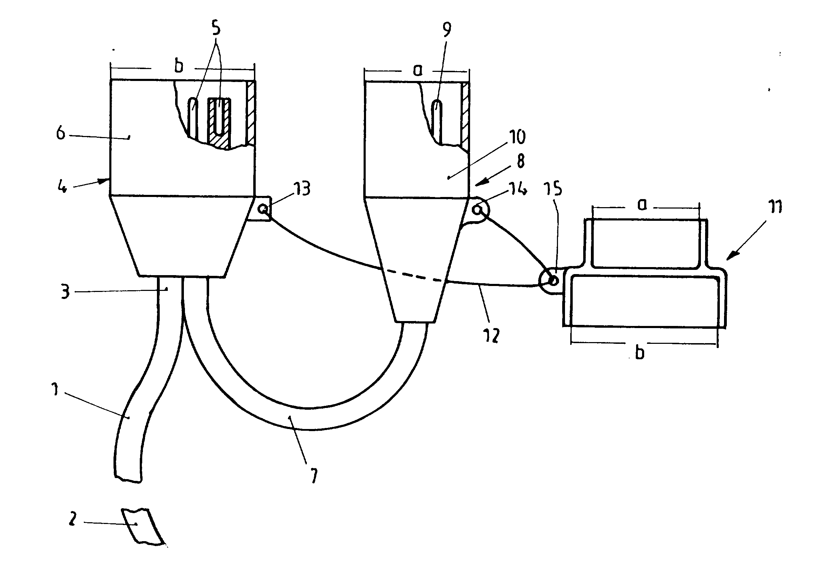

In der Zeichnung ist ein bevorzugtes Ausführungsbeispiel der elektrischen Leitung dargestellt. Die elektrische Leitung weist als ein wesentlicher Bestandteil ein Kabelstück 1 auf, welches beispielsweise eine Länge von 1,5 m aufweisen kann und dessen eines Ende 2 mit den entsprechenden Elementen, insbesondere Beleuchtungselementen des gezogenen Fahrzeuges, zu verbinden ist. Am anderen Ende 3 ist ein erster Stecker 4 angeordnet, dessen Kontaktpole 5 stift- und/oder hülsenförmig ausgebildet sein können. Die Kontaktpole 5 sind mit den hier nicht näher dargestellten Adern des Kabelstücks 1 in der vorgesehenen Weise elektrisch leitend verbunden. Der Stecker 4 kann beispielsweise als 13-poliger Stecker ausgebildet sein und demzufolge 13 Kontaktpole 5 aufweisen. Die Kontaktpole 5 sind in einem Gehäuse 6 untergebracht.

Mit den betreffenden Kontaktpolen 5 des Steckers 4 und mit dein Gehäuse 6 ist ein weiteres Kabelstück 7 elektrisch leitend und mechanisch verbunden. Das Kabelstück 7 ist wesentlich kürzer als das Kabelstück 1 ausgebildet und dient an sich nur dazu, einen weiteren Stecker 8 anzuschließen, dessen Kontaktpole 9 angedeutet sind. Der weitere Stecker 8 weist ein Gehäuse 10 auf, in dem beispielsweise sieben Kontaktpole 9 untergebracht sind. Die Kontaktpole 9 des Steckers 8 sind wiederum in ordnungsgemäßer Weise mit den jeweiligen Adern im Kabelstück 7 elektrisch leitend verbunden.

Die bisher beschriebene Einheit wird am vorderen Ende eines gezogenen Fahrzeuges, eines Lastenträgers oder dgl. montiert, so daß der Benutzer bei der Verbindung mit einem Zugfahrzeug die Wahl bzw. Möglichkeit hat, welchen der beiden Stecker 4 oder 8 er benutzt. Sofern das Zugfahrzeug mit einer beispielsweise 13-poligen Dose ausgestattet ist, wird er den Stecker 4 benutzen. Wenn das Zugfahrzeug eine 7-polige Dose besitzt, wird er den Stecker 8 zum Anschluß benutzen.

Die Leitung wird sinnvollerweise durch eine oder mehrere Schutzkappen 11 komplettiert, die auf die entsprechenden Durchmesser an den Gehäusen 6 und 10 abgestimmt sind. In der Figur ist eine kombinierte Schutzkappe 11 dargestellt, bei der gleichsam zwei Formteile Rücken an Rücken einstückig miteinander verbunden sind. Es ist ohne weiteres vorstellbar, daß auch zwei getrennte Formteile, jeweils eine Schutzkappe bildend, vorgesehen sein können. Die Schutzkappe 11 bzw. die Schutzkappen 11 können über ein oder mehrere Zugorgane 12, insbesondere eine Schnur, eine Kette oder dgl., aneinander angelenkt sein. Zu diesem Zweck besteht die Möglichkeit, den Stecker 4 mit einer am Gehäuse 6 angesetzten Öse 13 auszustatten. Am Gehäuse 10 des Steckers 8 ist eine weitere Öse 14 vorgesehen, und die Schutzkappe 11 trägt eine Öse 15. Das Zugorgan 12 ist mit den Ösen 13, 14, 15 so verbunden, daß die Teile mit geringem gegenseitigen Abstand aneinander gehalten sind, jedoch so, daß das jeweilige Aufsetzen der Schutzkappe 11 auf den Stecker 4 oder den Stecker 8 nicht behindert wird. Auf diese Weise dient das Zugorgan 12 gleichzeitig der Abstützung des nicht gekuppelten Steckers während der Fahrt der Einheit aus Zugfahrzeug und gezogenem Fahrzeug.

Es ist leicht vorstellbar, daß die Erfindung auch ausweitbar ist, wenn beispielsweise mehr als zwei Stecker 4, 8 am einen Ende 3 des Kabelstücks 1 angebracht sind. Es kann dann eine Kette oder eine Reihe gebildet werden, wobei es sinnvoll ist, jedem Stecker auch eine Schutzkappe 11 zuzuordnen bzw. die Möglichkeit zu schaffen, beispielsweise bei Anordnung von drei Steckern jeweils zwei Stecker mit der Schutzkappe 11 zu schützen.

## Patentansprüche

1. Elektrische Leitung mit einem eine Mehrzahl Adern aufweisenden Kabelstück (1), das an seinem einen Ende (2) mit einem gezogenen Fahrzeug, einem Lastenträger o. dgl. verbindbar ist und an seinem anderen Ende (3) einen ersten Stecker (4) zum Anschluß an eine auf dem Zugfahrzeug angeordnete Dose aufweist, **dadurch gekennzeichnet,** daß der Stecker (4) kabelstückseitig mit einem weiteren Kabelstück (7) elektrisch leitend verbunden ist, an dessen anderem Ende ein weiterer Stecker (8) angeschlossen ist, der anders als der erste Stecker (4) ausgebildet und damit einer entsprechend anders ausgebildeten weiteren Dose zugeordnet ist.

2. Leitung nach Anspruch 1, **dadurch gekennzeichnet,** daß an dem Ende (3) des Kabelstücks (1), an dem auch die Stecker (4, 8) angeordnet sind, zwei Schutzkappen (11) vorgesehen sind, die das wahlweise Verschließen des jeweils nicht benutzten Steckers (8, 4) ermöglichen.

3. Leitung nach Anspruch 2, **dadurch gekennzeichnet,** daß die beiden Schutzkappen (11) Rücken an Rücken miteinander zu einem einstückigen Formkörper vereinigt sind.

4. Leitung nach Anspruch 2 oder 3, **dadurch gekennzeichnet,** daß die Schutzkappe (11) oder die Schutzkappen (11) über ein oder mehrere Zugorgane (12), insbesondere Schnur, mit einem oder beiden Steckern (4, 8) verbunden ist.

5. Leitung nach einem oder mehreren der Ansprüche 1 bis 4, **dadurch gekennzeichnet,** daß der eine Stecker (4) als 13-poliger Stecker und der weitere Stecker (8) als 7-poliger Stecker ausgebildet sind.

6. Leitung nach einem oder mehreren der Ansprüche 1 bis 5, **dadurch gekennzeichnet,** daß über ein drittes Kabelstück ein dritter Stecker mit dem ersten Stecker (4) direkt oder indirekt über den zweiten Stecker (8) in Verbindung steht.

7. Leitung nach Anspruch 6, **dadurch gekennzeichnet,** daß der dritte Stecker ein 15-poliger Stecker ist.

## Claims

1. An electrical conductor comprising a cable section (1) having a plurality of leads, the cable section (1) with its one end (2) being connectable to a towed vehicle, a load bearing implement or the like and at its other end (3) comprising a first plug (4) for the connection to an outlet arranged on the towing vehicle, **characterized in**
that the plug (4) on the side of the cable section (1) is electrically connected to another cable section (7), the other end of which being connected to another plug (8) of different design than the first plug (4), and correspondingly being allocated to another outlet of different design.

2. The conductor of claim 1, **characterized in** that further to the plugs (4, 8) two protecting caps (11) are arranged at the end (3) of the cable section (1), the protecting caps (11) enabling an alternative closing of the unused plug (8, 4).

3. The conductor of claim 2, **characterized in** that the two protecting caps (11) are designed back to back as a one-piece body.

4. The conductor of claim 2 or 3, **characterized in** that the protecting cap (11) or the protecting caps (11) is connected to one or both of the plugs (4, 8) by one or several pulling means (12), especially a cord.

5. The conductor of one or several of the claims 1 to 4, **characterized in** that the plug (4) is formed as a 13-pole plug and the other plug (8) is formed as a 7-pole plug.

6. The conductor of one or several of the claims 1 to 5, **characterized in** that a third plug is directly or via the second plug (8) indirectly connected to the first plug (4) by a third cable section.

7. The conductor of claim 6, **characterized in** that the third plug is a 15-pole plug.

## Revendications

1. Conducteur électrique comportant un tronçon de câble (1) qui présente une multiplicité de brins et qui, à l'une (2) de ses extrémités, peut être raccordé à un véhicule tracté, un porte-charges ou analogues et, à son autre extrémité (3) comporte une première prise mâle (4) destinée à être connectée à une prise femelle disposée sur le véhicule tracteur, caractérisé en ce que, du côté du tronçon de câble, la prise mâle (4) est raccordée électriquement à un tronçon de câble supplémentaire (7), à l'autre extrémité duquel est connectée une prise mâle supplémentaire (8), qui est d'une configuration différente de celle de la première prise mâle (4) et est ainsi associée à une autre prise femelle d'une configuration différente correspondant à la sienne.

2. Conducteur selon la revendication 1, caractérisé en ce qu'à l'extrémité (3) du tronçon de câble (1) sur laquelle sont également disposées les prises mâles (4, 8), il est prévu deux capuchons protecteurs (11) qui permettent d'obturer, au choix, la prise mâle chaque fois inutilisée (8, 4).

3. Conducteur selon la revendication 2, caractérisé en ce que les deux capuchons protecteurs (11) sont réunis entre eux, dos contre dos, en un corps moulé monobloc.

4. Conducteur selon la revendication 2 ou 3, caractérisé en ce que le capuchon protecteur (11) ou les capuchons protecteurs (11) est/sont reliés à l'une des prises mâles (4, 8) ou aux deux, par l'intermédiaire d'un ou de plusieurs organes de couplage (12), en particulier d'un cordon.

5. Conducteur selon une ou plusieurs des revendications 1 à 4, caractérisé en ce que l'une (4) des prises mâles est réalisée sous la forme d'une prise mâle à 13 pôles et l'autre prise mâle (8) est réalisée sous la forme d'une prise mâle à 7 pôles.

6. Conducteur selon une ou plusieurs des revendications 1 à 5, caractérisé en ce qu'une troisième prise mâle est reliée, au moyen d'un troisième tronçon de câble, à la première prise mâle (4), directement ou indirectement par l'intermédiaire de la deuxième prise mâle (8).

7. Conducteur selon la revendication 6, caractérisé en ce que la troisième prise mâle est une prise mâle à 15 pôles.
